Europäisches Patentamt

(19) European Patent Office   (11) Numéro de publication: **0 031 119**
**B1**
Office européen des brevets

(12)                    **FASCICULE DE BREVET EUROPEEN**

(45) Date de publication du fascicule du brevet:   (51) Int. Cl.³: **H 02 P 7/28,** B 60 L 7/22
01.02.84

(21) Numéro de dépôt: **80107913.8**

(22) Date de dépôt: **15.12.80**

(54) Dispositif électronique de commande d'une machine à courant continu à excitation séparée.

(30) Priorité: **20.12.79 FR 7931244**

(43) Date de publication de la demande:
**01.07.81 Bulletin 81/26**

(45) Mention de la délivrance du brevet:
**01.02.84 Bulletin 84/5**

(84) Etats contractants désignés:
**CH DE FR GB IT LI**

(56) Documents cités:
**FR - A - 2 283 574**
**FR - A - 2 399 155**

(73) Titulaire: **ALSTHOM-ATLANTIQUE Société anonyme dite:, 38, Avenue Kléber, F-75784 Paris Cedex 16 (FR)**

(72) Inventeur: **Pham, Quang Minh, 44, rue Jean Cocteau, F-78310 Elancourt (FR)**

(74) Mandataire: **Weinmiller, Jürgen et al. Zeppelinstrasse 63, D-8000 München 80 (DE)**

## Dispositif électronique de commande d'une machine à courant continu á excitation séparée

L'invention concerne un dispositif électronique de commande d'une machine à courant continu à excitation séparée, utilisé dans la propulsion électrique des véhicules; la machine électrique peut fonctionner soit en mode traction, soit en mode de freinage par récupération ou freinage par rhéostat et permet en outre d'inverser statiquement le sens de marche de la machine.

Le hacheur électronique et la commutation du mode traction en mode freinage et inversement par des composants électroniques sont connus. Les dispositifs connus utilisent des hacheurs, capables de fonctionner soit en dévolteur, soit en survolteur, la commutation du mode dévolteur au mode survolteur, et inversement, étant réalisée à l'aide des circuits électroniques ou électromécaniques compliqués. Dans l'art antérieur, la commutation du mode traction en mode freinage et inversement était effectuée par des circuits électromécaniques lourds et encombrants. De même, l'inversion du sens de marche de la machine se faisait antérieurement par un appareillage électromécanique.

La présente invention remédie à ces inconvénients. Dans celle-ci, le hacheur électronique peut fonctionner aussi bien en dévolteur qu'en survolteur, ce hacheur alimente une machine à courant continu à excitation séparée et permet à cette machine de fonctionner soit en mode moteur, soit en mode génératrice grâce à des moyens entièrement électroniques. L'invention porte aussi sur un dispositif statique d'inversion du sens de marche, en avant ou en arrière, de la machine à courant continu.

La présente invention a pour objet un dispositif électronique de commande d'une machine à courant continu à excitation séparée comportant un induit de la machine et un enroulement d'excitation séparée, dispositif comportant un hacheur dévolteur-survolteur et un organe de freinage rhéostatique alimentés à partir d'une borne de polarité positive et d'une borne de polarité négative d'une tension d'alimentation de ligne filtrée et un inverseur du sens de marche de la machine, caractérisé en ce que ledit hacheur comporte en parallèle entre ladite borne de polarité positive et ladite borne négative une première branche constituée de deux condensateurs ayant un premier point, commun entre eux, et une deuxième branche constituée d'un premier thyristor principal et d'une première diode montés tête-bêche suivis d'une première inductance de protection, d'une deuxième inductance de protection et d'un deuxième thyristor principal monté tête-bêche avec une deuxième diode, un deuxième point, commun auxdites premières et deuxièmes inductances de protection, étant relié audit premier point par une troisième inductance d'extinction en série avec un redresseur en pont à quatre diodes dont les deux sommets restants sont reliés par un troisième thyristor d'extinction et qu'entre ledit deuxième point et ladite borne de polarité négative sont disposés une inductance de lissage en série avec l'induit de ladite machine à courant continu, une logique de commande commandant les gâchettes dudit premier thyristor principal en traction, dudit deuxième thyristor principal en freinage et dudit troisième thyristor d'extinction en traction et en freinage.

Selon une particularité d'une mise en œuvre avantageuse de l'invention, ledit inverseur électronique du sens de marche comporte une source alternative électrique alimentant un enroulement primaire d'un transformateur dont les extrémités de l'enroulement secondaire sont reliées à deux paires de thyristors montés tête-bêche, elles-mêmes reliées à une extrémité dudit enroulement à excitation séparée, l'autre extrémité dudit enroulement à excitation séparée étant reliée à un point milieu dudit enroulement secondaire du transformateur, ladite électronique de commande commandant sélectivement les gâchettes desdits thyristors desdites paires selon la marche avant ou arrière.

Selon une autre particularité de cette mise en œuvre, le dispositif de freinage rhéostatique comporte, en parallèle sur ledit deuxième point commun et ladite branche de polarité négative, un thyristor de freinage rhéostatique en série avec une résistance de freinage rhéostatique, ladite électronique de commande commandant la gâchette dudit thyristor de freinage lors du freinage rhéostatique.

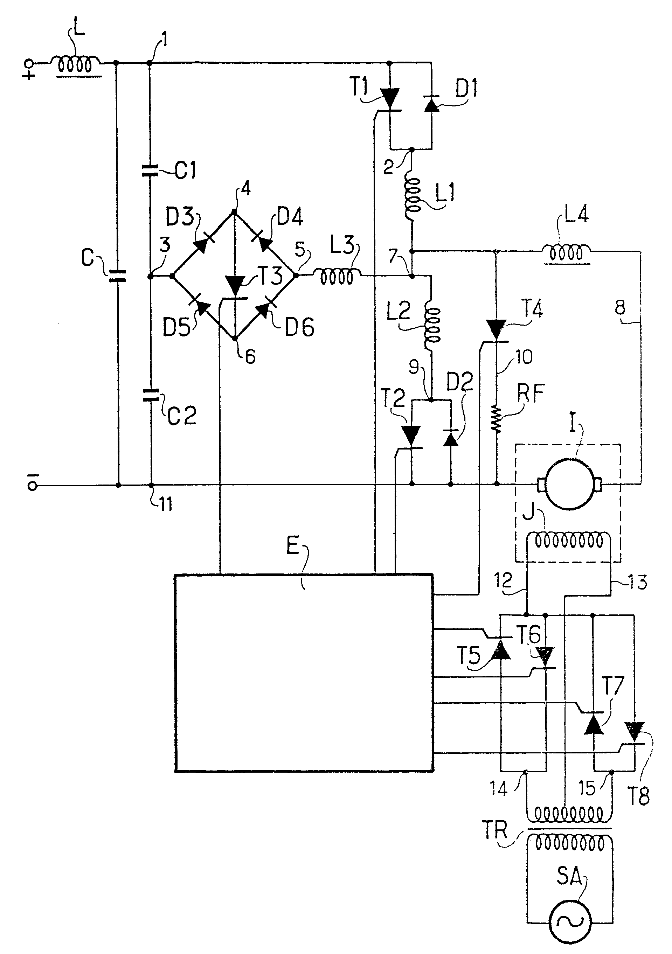

Un exemple de mise en œuvre de la présente invention donné à titre purement illustratif et nullement limitatif va être décrit en référence à la figure unique qui représente un schéma de principe d'une commande électronique d'une machine à courant continu à excitation séparée conformément à l'invention.

Sur la figure T1 et T2 représentent deux thyristors principaux, munis de deux diodes de retour D1 et D2, et un thyristor d'extinction unique T3. Les diodes D3, D4, D5 et D6 constituent des circuits d'aiguillage.

Un filtre passe-bas d'entrée est composé d'une inductance L et d'un condensateur C. L1 et L2 sont des inductances de protection des thyristors T1 et T2. L3 représente une inductance d'extinction. L4 est une inductance de lissage du courant induit du moteur; C1 et C2 représentent les condensateurs d'extinction. Les éléments C1, C2, L1, L2, L3, L4, D1, D2, D3, D4, D5, D6, T1, T2 et T3 constituent un hacheur électronique dévolteur-survolteur. I désigne l'induit de la machine à courant continu ayant pour enroulement d'excitation séparée J; T4 et RF désignent respectivement un thyristor et une résistance de freinage rhéostatique. Une source alternative SA, un transformateur TR et des thyristors T5, T6, T7 et T8 alimentent l'enroulement d'excitation séparée J.

Pour le sens de marche avant, le contrôle du courant d'excitation est assuré par les thyristors T5 et T7, pour le sens de marche arrière l'excitation J est assurée par les thyristors T6 et T8. La sélection du sens de marche de la machine à courant continu est donc assurée d'une manière statique par le choix de la paire de thyristors T5 et T7 ou T6 et T8. A titre d'exemple l'allumage de la gâchette de T5 est réalisé au cours de l'alternance positive de la source SA, alors que celui de la gâchette de T7 est réalisé au cours de l'alternance négative de la source SA.

La logique de commande de l'ensemble des circuits de puissance de la figure est représentée par un rectangle E.

Le circuit de traction comprend C1, C2, L1, L2, L3, L4, D1, D2, D3, D4, D5, D6, T1, T3 et I. Il fonctionne en hacheur dévolteur (la machine fonctionne en moteur puisque la tension de la source + − se transforme en tension inférieure aux bornes de l'induit I) de la manière suivante: le thyristor T1 est allumé au moyen d'une impulsion de commande fournie par E périodiquement à une période T et reste conducteur pendant un temps x.T, avec le taux x réglable électroniquement de zéro à un; T est la période de fonctionnement du hacheur et x le taux de travail. Le circuit (L4, I) est aussi soumis à une tension égale à la tension continue d'alimentation pendant une durée x.T et à une tension nulle pendant une durée égale à $(1-x)$ T, réglage du taux x permet d'obtenir aux bornes de l'induit une tension quelconque comprise entre une valeur très faible et une valeur proche de la tension continue d'alimentation V appliquée entre les bornes 1 et 11. Lorsque T1 est conducteur, le courant dans l'induit est croissant, lorsque T1 est bloqué, le courant induit décroît. Ce courant induit ne peut pas être interrompu au temps $t=x.T$, la diode D2 assure alors la circulation du courant dans l'induit I, lorsque T1 est bloqué. Le processus d'extinction du courant dans T1 est le suivant: les condensateurs C1 et C2 ayant la même capacité, ils sont également chargés, à l'état initial, à la tension $+V/2$ avec la polarité positive en 1 et en 3 respectivement pour C1 et pour C2. Pour éteindre T1, le thyristor T3 est allumé, deux courants d'inversion de forme sinusoïdale s'établissent: le premier courant circule dans la boucle (1, T1, 2, L1, 7, L3, 5, D4, 4, T3, 6, D5, C1, 1), le deuxième courant va de la borne 1 à la borne 11, en passant par 1, T1, 2, L1, 7, L3, 5, D4, 4, T3, 6, D5, 3, C2, 11; à la fin de l'inversion, ces deux courants s'annulent, le condensateur C1 est chargé à $-V/2$ avec la polarité positive en 3, le condensateur C2 chargé à $+3V/2$ avec la polarité positive en 3; le processus d'extinction de T1 débute ensuite par l'établissement de deux courants de forme également sinusoïdale: le premier courant circule dans la boucle (3, D3, 4, T3, 6, D6, 5, L3, 7, L1, 2, D1, 1, C1, 3), le deuxième courant va de 11 à 1, en passant par 11, C2, 3, D3, 4, T3, 6, D6, 5, L3, 7, L1, D1, 1; la diode D1 devient alors conductrice dès l'annulation du courant dans T1 qui se bloque, par l'application pendant un temps suffisant d'une tension inverse à ses bornes, due à la conduction de D1. A la fin de ce processus d'extinction, C1 et C2 se retrouvent chargés à $+V/2$ avec la polarité positive en 1 pour C1 et en 3 pour C2 et le cycle de fonctionnement en hacheur dévolteur recommence.

Le circuit de freinage par récupération comprend C1, C2, L1, L2, L3, L4, D1, D2, D3, D4, D5, D6, T2, T3 et I. Dans cette configuration le hacheur fonctionne en survolteur et la machine à courant continu en génératrice. Le sens du courant dans l'enroulement d'excitation J étant le même qu'en traction, le magnétisme rémanent permet l'amorçage de la machine en génératrice. L'induit I en rotation présente une force électromotrice à ses bornes de même polarité que celle existant en traction, c'est-à-dire opposée à la tension continue d'alimentation V. En rendant T2 passant, un courant s'établit dans le circuit (7, L2, 9, T2, 11, I, 8, L4, 7), de signe opposé à celui du courant de traction dans l'induit I et dans l'inductance de lissage L4, le courant d'excitation J gardant le même sens qu'en traction. Ce courant dans l'induit I croît en valeur absolue jusqu'au blocage du thyristor T2 à l'instant $t=y.T$, il se referme alors à travers 11, I, 8, L4, L1, D1 et la polarité positive (point 1) de la tension continue d'alimentation V qui récupère ainsi de l'énergie de freinage.

L'inversion du signe du couple électromagnétique nécessaire pour passer de traction en freinage est ainsi réalisée en inversant le sens du courant dans l'induit I. Le thyristor T2 fonctionne périodiquement à la période T et reste passant pendant un temps y.T avec le taux y compris entre zéro et un. Le courant renvoyé à la ligne d'alimentation vaut zéro pendant la durée y.T de conduction de T2 et est égal au courant dans l'induit I pendant le temps de blocage $(1-y)$T de T2; la valeur moyenne de ce courant de récupération est proportionnelle à $(1-y)$. L'extinction du courant dans T2 se produit de la même manière que celle de T1, par l'allumage de T3, mais avec C1 chargé à $+3V/2$ et C2 chargé à $-V/2$ à la fin du processus d'inversion.

La mise en service de la résistance RF de freinage rhéostatique s'effectue par l'allumage du thyristor T4. Soit R la résistance de l'élément RF. L'effort de freinage rhéostatique peut être réglé d'une manière continue par variation de la résistance de freinage de la valeur zéro à la valeur R, par la mise en conduction ou le blocage de T2. Ce freinage rhéostatique peut s'effectuer avec ou sans tension continue d'alimentation V.

Les applications du hacheur pour machine à courant continu à excitation séparée peuvent être du domaine de la traction ferroviaire.

**Revendications**

1. Dispositif électronique de commande d'une machine à courant continu à excitation séparée, comportant un induit (I) de la machine et un enroulement (J) d'excitation séparée, dispositif comportant un hacheur dévolteur-survolteur et un organe de freinage rhéostatique (T4, RF) alimentés à partir d'une borne de polarité positive et d'une borne de polarité négative d'une tension d'alimentation de ligne filtrée, et un inverseur (T5 à T8, TR, SA) du sens de marche de la machine, caractérisé en ce que ledit hacheur comporte en parallèle entre ladite borne de polarité positive et ladite borne négative une première branche constituée de deux condensateurs (C1, C2) ayant un premier point (3), commun entre eux, et une deuxième branche constituée d'un premier thyristor principal (T1) et d'une première diode (D1) montés tête-bêche suivis d'une première inductance (L1) de protection, d'une deuxième inductance (L2) de protection et d'un deuxième thyristor (T2) principal monté tête-bêche avec une deuxième diode (D2), un deuxième point (7), commun auxdites premières et deuxièmes inductances (L1, L2) de protection, étant relié audit premier point (3) par une troisième inductance (L3) d'extinction en série avec un redresseur en pont à quatre diodes (D3, D4, D5, D6) dont les deux sommets restants (4, 6) sont reliés par un troisième thyristor (T3) d'extinction et qu'entre ledit deuxième point (7) et ladite borne de polarité négative sont disposés une inductance (L4) de lissage en série avec l'induit (I) de ladite machine à courant continu, une logique de commande (E) commandant les gâchettes dudit premier thyristor principal (T1) en traction, dudit deuxième thyristor (T2) principal en freinage et dudit troisième thyristor (T3) d'extinction en traction et en freinage.

2. Dispositif électronique selon la revendication 1, caractérisé en ce que ledit inverseur du sens de marche comporte une source alternative électrique (SA) alimentant un enroulement primaire d'un transformateur (TR) dont les extrémités (14, 15) de l'enroulement secondaire sont reliées à deux paires de thyristors (T5, T6, T7, T8) montés tête-bêche, elles mêmes reliées à une extrémité (12) dudit enroulement à excitation séparée (J), l'autre extrémité (13) dudit enroulement à excitation séparée (J), étant reliée à un point milieu dudit enroulement secondaire du transformateur (TR) ladite électronique de commande commandant sélectivement les gâchettes desdits thyristors (T5, T6, T7, T8) desdites paires selon la marche avant ou arrière.

3. Dispositif électronique selon la revendication 1, caractérisé en ce que ledit dispositif de freinage rhéostatique comporte en parallèle sur ledit deuxième point (7) et ladite branche de polarité négative un thyristor (T4) de freinage rhéostatique en série avec une résistance (RF) de freinage rhéostatique, ladite électronique de commande (E) commandant la gâchette dudit thyristor de freinage (T4) lors du freinage rhéostatique.

**Patentansprüche**

1. Elektronische Vorrichtung zur Steuerung einer fremderregten Gleichstrommaschine, mit einer Ankerwicklung (I) und einer getrennten Erregerwicklung (J), wobei die Vorrichtung einen spannungserniedrigenden und -erhöhenden Zerhacker und ein rheostatisches Bremsorgan (T4, RF) besitzt, die über eine positive und eine negative Klemme mit einer gefilterten Netzspannung und über einen Umschalter (T5 bis T8, TR, SA) betreffend die Laufrichtung der Maschine gespeist werden, dadurch gekennzeichnet, daß der Zerhacker zwischen der positiven und der negativen Klemme einen ersten Zweig, bestehend aus zwei einen gemeinsamen Schaltpunkt (3) aufweisenden Kondensatoren (C1, C2) und einen zweiten Zweig besitzt, der aus einem ersten Hauptthyristor (T1) mit einer ersten dazu antiparallelen Diode (D1) sowie daran anschließend aus einer ersten Schutzinduktivität (L1), einer zweiten Schutzinduktivität (L2) und einem zweiten Hauptthyristor (T2) mit einer dazu antiparallelen zweiten Diode (D2) besteht, wobei ein der ersten und der zweiten Schutzinduktivität (L1, L2) gemeinsamer zweiter Schaltpunkt (7) mit dem ersten Schaltpunkt (3) über eine dritte Induktivität, Löschinduktivität (L3) genannt, in Reihe mit einem aus vier Dioden (D3, D4, D5, D6) bestehenden Brückengleichrichter verbunden ist, dessen beide übrige Brückenpunkte (4, 6) über einen dritten Löschthyristor (T3) miteinander verbunden sind, und daß zwischen dem zweiten Schaltpunkt (7) und der negativen Klemme eine Glättungsinduktivität (L4) in Reihe mit der Ankerwicklung (I) der Gleichstrommaschine liegt, wobei eine Steuerlogik (E) die Zündelektrode des ersten Hauptthyristors (T1) im Fahrbetrieb, die Zündelektrode des zweiten Hauptthyristors (T2) im Bremsbetrieb und die Zündelektrode des dritten Löschthyristors (T3) im Fahr- und im Bremsbetrieb ansteuert.

2. Elektronische Vorrichtung nach Anspruch 1, dadurch gekennzeichnet, daß der Umschalter für die Laufrichtung der Maschine eine elektrische Wechselstromquelle (SA) enthält, die die Primärwicklung eines Transformators (TR) speist, wobei die Enden (14, 15) der Sekundärwicklung mit zwei Paaren von gegenparallel geschalteten Thyristoren (T5, T6; T7, T8) verbunden sind, die ihrerseits an ein Ende (12) der getrennten Erregerwicklung (J) angeschlossen sind, während das andere Ende (13) dieser getrennten Erregerwicklung (J) mit einem Mittelabgriff der Sekundärwicklung des Transformators (TR) verbunden ist, und wobei die Steuerelektronik selektiv die Zündelektroden der Thyristoren (T5, T6, T7, T8) dieser Paare je nach der Laufrichtung der Maschine ansteuert.

3. Elektronische Vorrichtung nach Anspruch 1, dadurch gekennzeichnet, daß die rheostatische Bremsvorrichtung parallel zum zweiten Schaltpunkt (7) und der negativen Klemme einen rheostatischen Bremsthyristor (T4) in Reihe mit einem rheostatischen Bremswiderstand (RF) enthält, und die Steuerelektronik (E) die Zündelektrode dieses Bremsthyristors (T4) während des rheostatischen Bremsens ansteuert.

**Claims**

1. An electronic control device for a separately excited direct current machine, which includes an armature winding (I) and a separately excited field winding (J), the device comprising a step-up/step-down-chopper and a rheostatic braking means (T4, RF) which are fed from a positive polarity terminal and a negative polarity terminal by a filtered line voltage, and comprising a reverser (T5 to T8, TR, SA) for reversing the direction of the machine rotation, charcterized in that said chopper comprises between said positive polarity terminal and said negative terminal, a first branch consisting of two capacitors (C1, C2) with a first connection point (3) therebetween, and a second branch consisting of a first main thyristor (T1) and of a first diode (D1) mounted antiparallelly thereto, these elements being followed by a first protective inductor (L1), a second protective inductor (L2) and a second main thyristor (T2) which is mounted antiparallelly with a second diode (D2), a second connection point (7) which is common to the first and second protection inductors (L1, L2) being connected to said first point (3) via a series arrangement of a third inductor called turn-off inductor (L3) and a bridge type rectifier with four diodes (D3, D4, D5, D6), the remaining bridge terminals (4, 6) being connected by a third turn-off thyristor (T3), and that a smoothing inductor (L4) and the armature winding (I) of the DC machine are disposed in series arrangement between said second point (7) and said negative polarity terminal, a control logic (E) being provided to control the gate of the first main thyristor (T1) during the traction phase, the gate of the second main thyristor (T2) during the braking phase and the gate of the third turn-off thyristor (T3) during the traction and the braking phase.

2. An electronic device according to claim 1, characterized in that the reverser for reversing the direction of rotation comprises an electric AC source (SA) feeding a primary winding of a transformer (TR), the terminals (14, 15) of the secondary winding of which are connected to two couples of antiparallelly mounted thyristors (T5, T6; T7, T8), these couples being connected to one terminal (12) of the separate field winding (J), whereas the other terminal (13) of said separate field winding (J) is connected to a mid-point of said secondary winding of the transformer (TR), the control logic controlling selectively the gates of the thyristors (T5, T6, T7, T8) of said couples according to the direction of the machine rotation.

3. An electronic device according to claim 1, characterized in that the rheostatic braking device comprises a rheostatic braking thyristor (T4) in series with a rheostatic braking resistor (RF) between the second connection point (7) and the negative polarity terminal, the control logic (E) controlling the gate of said braking thyristor (T4) during the rheostatic braking operation.

5